# EUROPÄISCHE PATENTSCHRIFT

(11) **EP 1 923 586 B1**
(45) Veröffentlichungstag und Bekanntmachung des Hinweises auf die Patenterteilung: **17.08.2016**
(21) Anmeldenummer: 07022162.7
(22) Anmeldetag: 15.11.2007
(51) Int. Cl.: F16C 11/10, F16D 49/00

(54) **Vorrichtung zum Klemmen von Wellen oder Ringen**
Device for jamming shafts or rings
Dispositif de blocage d'arbres ou de bagues

(30) Priorität: 16.11.2006 DE 202006017481 U
(43) Veröffentlichungstag der Anmeldung: 21.05.2008
(73) Patentinhaber: NILES-SIMMONS Industrieanlagen GmbH, 09117 Chemnitz (DE)
(72) Erfinder: Fraaß, Michael, 07318 Saalfeld (DE); Delling, Klaus, 08236 Ellefeld (DE); Mehnert, Jens, Dr., 08468 Heinsdorfergrund/ OT Hauptmannsgrün (DE)
(74) Vertreter: Patentanwälte Findeisen & Neumann

(56) Entgegenhaltungen:
- EP-A1- 1 629 939
- EP-A2- 0 801 246
- EP-B1- 1 228 321
- EP-B1- 1 651 881
- DE-A1- 3 938 575
- DE-A1- 4 225 523
- DE-A1-102004 010 987
- FR-A- 1 409 430
- US-A- 3 075 414

## Beschreibung

Die Erfindung betrifft eine Vorrichtung zum Klemmen von Wellen oder Ringen, die um ihre Längsachse schwenkbar oder drehbar und in einer beliebigen Drehstellung positionierbar sind.

Als Stand der Technik sind Vorrichtungen bekannt, mit denen eine schwenkbare oder axiale Führung von Wellen, Ringen und ähnlichen Bauelementen durch eine Klemmwirkung unter Verwendung von mit Druck beaufschlagten Kammern oder Keilelementen realisiert wird.

Aus DE 200 02 915 U1 ist eine diesbezügliche Vorrichtung bekannt, bei der über ein Kugelkeilsystem eine Klemmkraft erzeugt wird, wobei diese Vorrichtung jedoch keine verformbaren Druckkammern aufweist.

DE 10 2004 010 987 A1 beschreibt eine Sicherungseinheit zur Arretierung von Gewichten, wobei ein die Bewegung des Gewichts blockierendes Klemmsystem durch ein mit dem Gewichtskörper zusammenwirkendes Ventil gesteuert wird. Hierbei wird die Klemmkraft über ein Kraftübertragungselement radial übersetzt. Allerdings ist diese Klemmung auf eine axiale Bewegung (Stangenklemmung) beschränkt, so dass lediglich ein ungewolltes Lösen in axialer Richtung vermieden wird.

Die Klemmvorrichtung gemäß DE 203 06 924 U1 weist ein Basiselement auf, das über mindestens zwei benachbarte Wandungen mit einem Beaufschlagungselement verbunden ist, über welches die erzeugten Klemmkräfte auf ein zugeordnetes Objekt übertragbar sind. Hierbei definieren die mindestens zwei benachbarten und beispielsweise als Biegebleche ausgestalteten Wandungen einen Druckraum, der mit Überdruck oder Unterdruck beaufschlagbar ist. Diese Vorrichtung bezieht sich jedoch lediglich auf Längsprofile für die Klemmung von Linearbewegungen.

Die oben genannten Fundstellen zum Stand der Technik umfassen Klemmvorrichtungen, deren Wirkprinzip auf der Verwendung von verformbaren und mit Druck beaufschlagbaren Kammern beruht. Hierbei wird lediglich eine Klemmung von Linearbewegungen erreicht. Diese Klemmvorrichtungen erfordern eine Vielzahl von Bauteilen und Übertragungselementen, die einen erheblichen Herstellungs- und Kostenaufwand bewirken. Der wesentliche Nachteil dieser technischen Lösungen besteht jedoch darin, dass bei Funktionsstörungen des jeweiligen Druckmechanismus die Klemmkraft stark abfällt oder völlig aufgehoben wird, so dass letztlich die Funktionsfähigkeit der gesamten Anlage gefährdet ist.

Aufgabe der Erfindung ist es, eine Vorrichtung zu schaffen, mit der eine stufenlose, positionssichere und selbsttätige Klemmung einer Welle oder eines Ringes mit einem ringförmigen Bauteil erreicht wird, wobei das ringförmige Bauteil gleichzeitig als Druckkammer und Klemmelement wirksam wird und auch bei Ausfall des die Druckkammer beaufschlagenden Mediums (Luft oder Fluid) eine Klemmung garantiert.

Diese Aufgabe wird mit den technischen Merkmalen gemäß Patentanspruch 1 gelöst. Vorteilhafte Ausgestaltungen sind Gegenstand der abhängigen Unteransprüche, deren technische Merkmale und Wirkungen im Ausführungsbeispiel näher beschrieben werden.

Die erfindungsgemäße Vorrichtung umfasst eine Klemmeinrichtung mit einem ringförmigen Bauteil, das aus zwei druckdicht fest miteinander zusammengefügten Ringhälften besteht. Anstelle von lediglich zwei Ringhälften kann das ringförmige Bauteil auch aus mehreren Segmenten bestehen, die horizontale und/oder vertikale Trennebenen aufweisen. Hierbei können die Trennebenen bzw. Fügestellen des nach Art eines Hohlringes ausgestalteten Bauteils verschiedenartig angeordnet werden. Bevorzugt wird eine Anordnung zwischen den beiden Halbringen in einem Halbring oder in beiden Halbringen derart, dass die Trennebene bzw. Fügestelle in einem oder in beiden Nullpunkten der Biegelinie des Profils liegt.

Bei einer Druckbeaufschlagung durch ein Medium verformt sich das ringförmige Bauteil in der Dicke, wodurch die wirksame Klemmfläche ausgehend von der geklemmten Welle oder dem geklemmten Ring radial in Wirkrichtung abgehoben wird. Die Klemmung der (des) jeweils zugeordneten Welle (Ringes) erfolgt hingegen ohne Energiezufuhr durch Eigenrückstellung.

Demzufolge verhindert das ringförmige und nach Art eines Hohlringes ausgestaltete Bauteil, das gleichzeitig ein Klemm- und befestigtes Arretierelement darstellt, auch bei Ausfall des Druckmediums (Luft oder Fluid) ein ungewolltes Drehen einer Schwenkachse, hervorgerufen durch Gewichtslast. Dadurch wird verhindert, dass die (der) jeweils zu klemmende Welle (Ring), beispielsweise in einer Ausführung als Schwenkspindel, bei einer Havarie, bei ausgeschalteter Maschine oder beim Transport abrutscht. Somit wird ein Gefährdungspotential für die jeweilige technische Anlage und für in der Nähe befindliche Personen ausgeschlossen.

Die Klemmung kann nur gelöst werden, sofern die Druckkammer des Hohlrings erneut mit dem Medium beaufschlagt wird. Dabei wird der Hohlring aufgrund der ovalen Geometrie bei einer Druckbeaufschlagung seitlich aufgedehnt. Dadurch hebt sich die Klemmfläche um einen bestimmten Betrag von der Gegenfläche ab und die Klemmung löst sich. Entsprechend des konkret gewünschten Klemmmomentes wird der Klemmdurchmesser mit Übermaß gefertigt, wodurch - ähnlich wie bei einem Schrumpfsitz - das Klemmmoment erzeugt wird.

Das Klemmen wird demzufolge lediglich durch die Rückstellkraft der Druckkammer und der daraus resultierenden ringförmigen Flächenpressung am Klemmdurchmesser erzeugt. Die Montage des Hohlringes erfolgt im druckbeaufschlagten Zustand, damit das erforderliche Spiel vorhanden ist.

Als vorteilhafte Ausgestaltung ist ein symmetrischer Hohlring mit einer symmetrischen ovalen Druckkammer vorgesehen. Durch diese symmetrische Gestaltung wird erreicht, dass die Lösebewegung der Klemmfläche exakt parallel zur Welle erfolgt, wodurch ein gleichmäßiges Aufsetzen und Abheben gewährleistet ist.

Eine weitere Ausgestaltung sieht vor, dass der Hohlring an einem feststehenden Gehäuseteil befestigt ist. Dabei klemmt seine radiale Rückstellpressung die bewegte Welle. Alternativ kann in Abhängigkeit der konkreten konstruktiven Gestaltung auch eine hierzu umgekehrte Bauweise realisiert werden.

In weiterer Ausgestaltung wird vorgeschlagen, dass mehrere Hohlringe hintereinander, also in Form eines Klemmpaketes, befestigt werden. Somit kann eine größere Klemmwirkung erreicht werden, ohne hierfür ein extremes Übermaß realisieren zu müssen.

Eine weitere vorteilhafte Ausgestaltung schlägt vor, dass die Geometrie der Druckkammer in geeigneter Form unsymmetrisch gestaltet wird. Dadurch wird erreicht, dass die Klemmfläche definiert abkippt oder verkantet. Folglich können auch schräg angeordnete Klemmflächen auf einer Gegenfläche geklemmt werden.

Unabhängig von der jeweils konkreten Ausgestaltung ist die Klemmfläche des Hohlringes hochgenau geschliffen oder anders fein bearbeitet parallel und vorzugsweise rechtwinklig zum Gehäuse ausgeführt, damit eine exakt stufenlose Ausrichtung garantiert wird.

Als weitere Ausgestaltung wird vorgeschlagen, dass an der Oberfläche des Hohlringes ein Sensor angeordnet ist, zum Beispiel ein Dehnmessstreifen oder induktiver Abstandssensor. Mit einem derartigen Sensor kann der Verformungszustand des Hohlringes überwacht werden. Somit wird die Steuerung über eine Auswertelektronik informiert und betätigt, wodurch Fehlschaltungen vermieden und notwendige Verriegelungsbefehle ausgegeben werden.

Die erfindungsgemäße technische Lösung kann verschiedenartig weiter ausgestaltet werden. So kann beispielsweise die Klemmfläche auch andere Oberflächenformen aufweisen, wie einen Antirutschbelag oder definiert aufgetragene geraute Schichten. Ebenso können zur definierten Erhöhung des Klemmmomentes mehrere Hohlringe befestigt werden. Schließlich kann die Druckdichtheit des Hohlringes auch mit einer Dichtung einseitig erreicht werden.

Ein Ausführungsbeispiel der Erfindung ist in der Zeichnung dargestellt und wird nachfolgend beschrieben. Es zeigen:
- Fig. 1: den grundsätzlichen Aufbau einer erfindungsgemäßen Vorrichtung mit Befestigung des Hohlringes an einem Gehäuse
- Fig. 2: die Anordnung gemäß Fig. 1 mit einer modifizierten Ausführung der Trennebene zwischen den Halbringen
- Fig. 3: den grundsätzlichen Aufbau einer erfindungsgemäßen Vorrichtung mit Befestigung des Hohlringes an einer bewegbaren Welle
- Fig. 4: den grundsätzlichen Aufbau einer hydraulischen Schaltung für die Druckkammer

Die in der Zeichnung dargestellte Vorrichtung ist zum Klemmen von Wellen 1 und Ringen 28 geeignet, die um eine Längsachse 26 schwenkbar oder drehbar sind und in einer beliebigen Drehstellung 27 positioniert werden können.

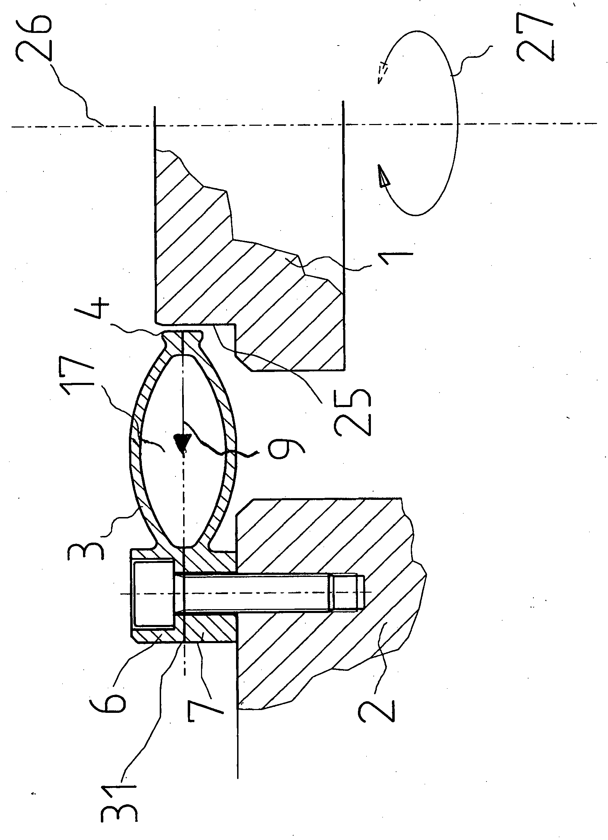

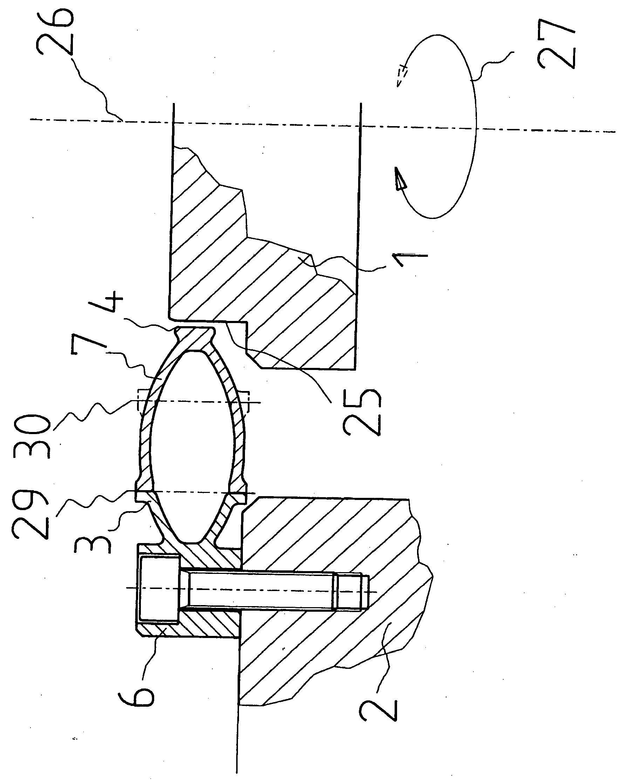

Fig. 1 und Fig. 2 zeigen eine diesbezügliche Ausführung zur Klemmung einer Welle 1. Hierbei ist an einem Gehäuse 2 ein Hohlring 3 befestigt, der über eine Klemmfläche 4 mit einer Gegenfläche 25 der Welle 1 in Wirkverbindung gebracht wird. Bei Druckbeaufschlagung des Hohlringes 3 durch ein Fluid 5 wird der Hohlring 3, der aus den beiden zusammengefügten Halbringen 6 und 7 besteht, aufgrund seiner ovalen Geometrie seitlich aufgedehnt. Hierdurch hebt sich die Klemmfläche 4 um einen bestimmten Betrag von der Welle 1 in Wirkrichtung 9 ab und die Klemmung wird gelöst. Entsprechend des jeweils gewünschten Klemmmomentes wird der Klemmdurchmesser 4 mit Übermaß gefertigt, wodurch ähnlich wie bei einem Schrumpfsitz das Klemmmoment erzeugt wird. Die Klemmfunktion wird demzufolge nur durch die Rückstellkraft der Druckkammer 3 und der daraus resultierenden ringförmigen Flächenpressung am Klemmdurchmesser 4 erzeugt. Die Montage des Hohlringes 3 erfolgt im druckbeaufschlagten Zustand, damit das erforderliche Spiel vorhanden ist.

Aus Fig. 1 ist eine Variante ersichtlich, bei der zwischen den Halbringen 6 und 7 eine Trennebene 31 ausgestaltet ist, die rechtwinklig zur Längsachse 26 angeordnet ist.

Aus Fig. 2 ist eine alternative Variante ersichtlich, bei der zwischen den Halbringen 6 und 7 zwei Trennebenen 29 und 30 ausgestaltet sind, die parallel zueinander und ebenfalls parallel zur Längsachse 26 angeordnet sind. Hierbei wird die Trennebene in den Nullpunkten einer Biegelinie des Profils dargestellt.

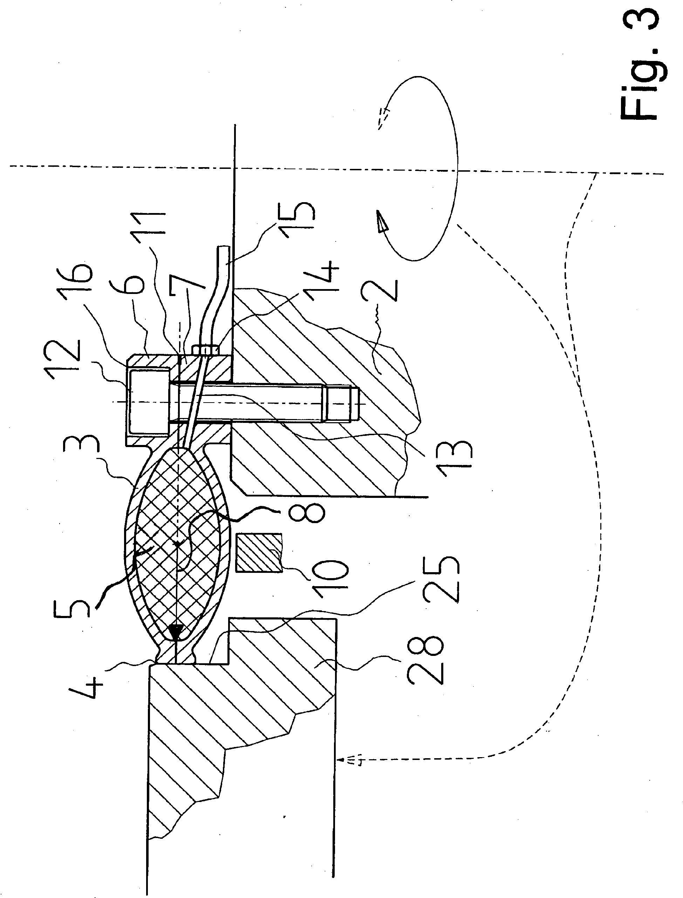

Fig. 3 zeigt eine Ausführung zur Klemmung eines Ringes 28. Dabei ist am Gehäuse 2, das hier in Form einer bewegten Welle 2 ausgestaltet ist, ein Hohlring 3 befestigt. Dieser Hohlring 3 wird über eine Klemmfläche 4 mit einer Gegenfläche 25 des Ringes 28 in Wirkverbindung gebracht. Die Befestigung des Hohlringes 3 erfolgt mit Befestigungsschrauben 12. Die Druckkammer 17 wird über eine Leitung 15 mit Verschraubung 14 und einen Druckkanal 13 mit einem Fluid 5 beaufschlagt. Weiterhin umfasst dieser Aufbau einen Sensor 10, der zur Abstandsbestimmung dem Hohlring 3 zugeordnet ist.

Aus Fig. 1 und Fig. 2 ist jeweils eine Position ersichtlich, bei der zwischen der Klemmfläche 4 des Hohlringes 3 und der Gegenfläche 25 an der Welle 1 ein freier Spalt verbleibt. Folglich kann sich die Welle 1 in dieser Position ohne Einschränkung um ihre Längsachse 26 drehen.

Hingegen ist aus Fig. 3 eine Position ersichtlich, bei der die Klemmfläche 4 des Hohlringes 3 vollflächig auf der Gegenfläche 25 anliegt. Folglich ist in dieser Position der hier gezeigte Ring 28 fest geklemmt.

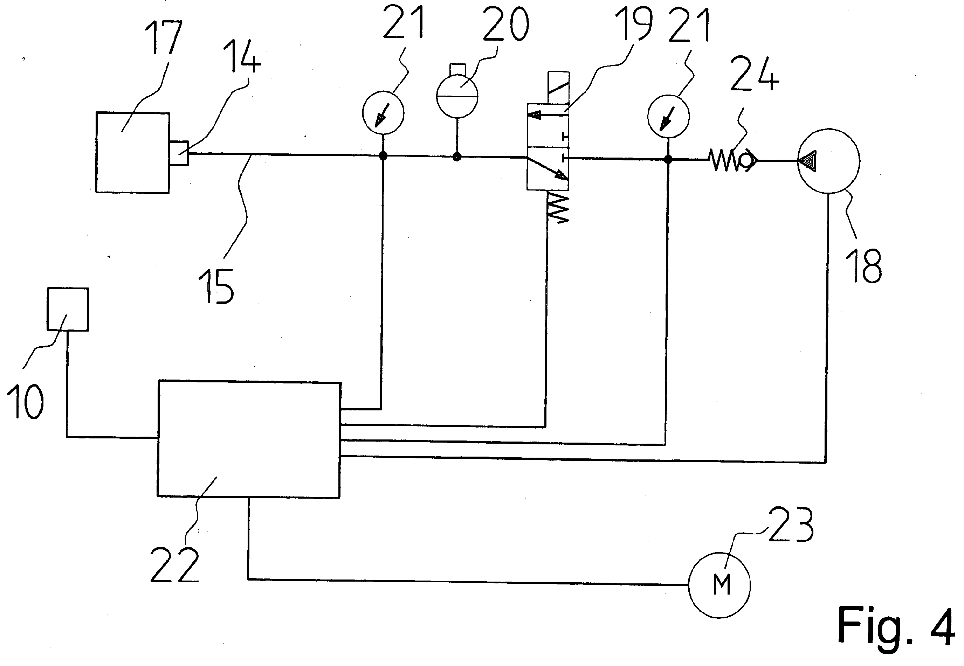

In Fig. 4 ist eine hydraulische Schaltung dargestellt, wie sie beispielsweise für die Schaltung der Druckkammer 17 anzuwenden ist. Diese Funktion kann alternativ auch mit Druckluft und einer dementsprechenden pneumatischen Schaltung erzeugt werden.

Bei der Ausführung gemäß Fig. 4 wird der Öldruck von einem Pumpenaggregat 18 erzeugt. Das Drucköl zum Lösen der Klemmwirkung der Klemmfläche 4 wird über eine Schlauchleitung 15 zugeführt und durch eine Verschraubung 14 in die Druckkammer 17 eingeleitet. Ein Rückschlagventil 24 sichert die Druckhaltung in der Druckkammer 17 während des Lösens der Klemmung gegenüber dem Pumpenaggregat 18.

Im Strömungsweg zwischen dem Pumpenaggregat 18 und der Druckkammer 17 ist ein Wegeventil 19 angeordnet, das im stromlosen Zustand auf Ablauf des Öles steht. Weiterhin kann ein Druckspeicher 20 zugeordnet werden, der ein gezielt langsameres Klemmen bewirkt.

Allerdings wird dieser Druckspeicher 20 überwiegend nicht benötigt. An einem Manometer 21 kann der anstehende Druck abgelesen werden. Die Schaltung des Wegeventils 19 ist mit einer Steuerung 22 für den Antriebsmotor 23 für die Welle 1 entsprechend verknüpft. Das Signal des Abstandssensors 10 dient zur Sicherheitsverriegelung des Antriebsmotors 23 und wird in die Steuerung zurückgeführt.

### Bezugszeichenliste

- 1: Welle
- 2: Gehäuse
- 3: ringförmiges Bauteil, Hohlring
- 4: Klemmfläche, Klemmdurchmesser
- 5: Druckmedium, Fluid
- 6: erster Halbring
- 7: zweiter Halbring
- 8: Wirkrichtung "KLEMMEN"
- 9: Wirkrichtung "LÖSEN"
- 10: Abstandssensor
- 11: Dichtung
- 12: Befestigungsschraube
- 13: Druckkanal
- 14: Verschraubung
- 15: Schlauch, Leitung
- 16: Bohrung im Hohlring für Befestigungsschraube
- 17: Druckkammer
- 18: Pumpenaggregat
- 19: Wegeventil
- 20: Druckspeicher
- 21: Manometer, Drucksensor
- 22: Steuerung
- 23: Antriebsmotor für Welle
- 24: Rückschlagventil
- 25: Gegenfläche
- 26: Längsachse
- 27: Drehstellung
- 28: Ring
- 29: Trennebene A
- 30: Trennebene B
- 31: Trennebene C

## Patentansprüche

1. Vorrichtung zum Klemmen von Wellen (1) oder Ringen (28), die um ihre Längsachse (26) schwenkbar oder drehbar und in einer beliebigen Drehstellung (27) positionierbar sind, wobei die Welle (1) oder der Ring (28) mit einem Hohlring (3) in Wirkverbindung steht, der eine durch, ein Druckmedium (5) elastisch verformbare Druckkammer (17) aufweist, die mindestens einen Druckhanal (13) aufweist und über den mindestens einen Druckkanal (13) mit einer Einrichtung (15; 18; 19; 20; 21; 24; 22) zur Erzeugung und Steuerung des Druckmediums (5) in Verbindung steht, **dadurch gekennzeichnet,**
**dass** die Druckkammer (17) des Hohlringes (3) aus zwei druckdicht zusammengefügten Halbringen (6; 7) oder aus mehreren druckdicht zusammengefügten Segmenten gebildet wird, wobei bei einem aus mehreren Segmenten gebildeten Hohlring (3) diese Segmente horizontale (31) und/oder vertikale Trennebenen (29; 30) aufweisen und wobei durch die druckdicht zusammengefügten Halbringe (6; 7) oder die druckdicht zusammengefügten Segmente eine radial angeordnete ringförmige Klemmfläche (4) gebildet wird, die einer feststehenden Gegenfläche (25) an der Welle (1) oder am Ring (28) zuordenbar ist.

2. Vorrichtung nach Anspruch 1, **dadurch gekennzeichnet,**
**dass** die Halbringe (6; 7) des Hohlringes (3) symmetrisch ausgestaltet sind.

3. Vorrichtung nach Anspruch 1, **dadurch gekennzeichnet,**
**dass** die Halbringe (6; 7) des Hohlringes (3) unsymmetrisch ausgestaltet sind.

4. Vorrichtung nach Anspruch 1, **dadurch gekennzeichnet,**
**dass** die Klemmfläche (4) des Hohlringes (3) die Welle (1) oder den drehbaren Ring (28) klemmt, wobei der Hohlring (3) am feststehenden Gehäuse (2) befestigt ist.

5. Vorrichtung nach Anspruch 1, **dadurch gekennzeichnet,**
**dass** die Klemmfläche (4) des Hohlringes (3) das Gehäuse (2) klemmt, wobei der Hohlring (3) an der drehenden Welle (1) befestigt ist.

6. Vorrichtung nach Anspruch 1, **dadurch gekennzeichnet,**
**dass** der Hohlring (3) mit einem Druckmedium (5) gefüllt ist, welches die druckdicht gefügten Halbringe (6; 7) mittels der Einrichtung (18; 19; 20; 21) zur Erzeugung des Arbeitsdruckes über den Schlauch (15) und den Druckkanal (13) bei Einstellung eines definierten Betriebsdruckes elastisch zum Einstellen der Wirkrichtung "LÖSEN" (9) verformt und bei Verringerung dieses Betriebsdruckes die Wirkrichtung "KLEMMEN" (8) durch eine elastische Rückverformung der Halbringe (6; 7) einstellt.

7. Vorrichtung nach Anspruch 1, **dadurch gekennzeichnet,**
**dass** mehrere Hohlringe (3) parallel zueinander angeordnet sind.

8. Vorrichtung nach Anspruch 1, **dadurch gekennzeichnet,**
**dass** ein Abstandssensor (10) und/oder andere Erfassungseinrichtungen außerhalb der Halbringe (6; 7) angeordnet sind und einen Abstandswert an eine Steuerung (22) ausgeben.

9. Vorrichtung nach Anspruch 1, **dadurch gekennzeichnet,**
**dass** eine Einrichtung zur Lageüberwachung der Klemmfläche (4) des Hohlringes (3) über einen Abstandssensor (10) und/oder andere Erfassungseinrichtungen außerhalb der Halbringe (6; 7) Lagedaten der Klemmfläche (4) und/oder der Halbringe (6, 7) an eine Steuerung (22) ausgibt.

10. Vorrichtung nach Anspruch 1, **dadurch gekennzeichnet,**
**dass** die Halbringe (6; 7) durch Umformen, Schweißen, Kleben oder Klemmen zu einem Hohlring (3) ohne oder mit einer zusätzlichen Dichtung (11) gefügt werden.

11. Vorrichtung nach Anspruch 1, **dadurch gekennzeichnet,**
**dass** die Klemmfläche (4) des Hohlringes (3) und/oder die Gegenfläche (25) an der Welle (1), am Ring (28) oder am Gehäuse (2) eine reibwerterhöhende Beschichtung aufweist/aufweisen.

12. Vorrichtung nach Anspruch 1, **dadurch gekennzeichnet,**
**dass** die Klemmfläche (4) einen Sensor aufweist, der den Verschleißzustand überwacht.

13. Vorrichtung nach Anspruch 1, **dadurch gekennzeichnet,**
**dass** die Einrichtung zur Erzeugung des definierten Arbeitsdruckes in der Druckkammer (17) des Hohlringes (3) aus einer Pumpe (18), einem steuerbaren Wegeventil (19), einem Druckspeicher (20), einem Drucksensor (21) sowie einer Steuerung (22) besteht.

14. Vorrichtung nach Anspruch 1, **dadurch gekennzeichnet, dass** eine Steuerung (22) die Stromaufnahme eines Antriebsmotors (23) für die Welle (1) erfasst, mit einem Sollwert vergleicht und bei einem Schwellwert die Energiezufuhr zum Antriebsmotor (23) abschaltet.

## Claims

1. A device for clamping shafts (1) or rings (28) that can be swiveled or rotated about their longitudinal axis (26) and positioned in any desired turning position (27), wherein said shaft (1) or ring (28) is operatively connected with a hollow ring (3) comprising a compression chamber (17) that can be resiliently deformed by a pressure medium (5), said compression chamber (17) comprising at least one pressure channel (13) and communicating via said pressure channel (13) with a device (15; 18; 19; 20; 21; 24; 22) for producing and controlling the pressure medium (5), **characterized in that**
the pressure chamber (17) of the hollow ring (3) is formed of two half rings (6; 7) joined in a pressure-tight manner or of multiple segments joined in a pressure-tight manner, wherein, if the hollow ring (3) is formed by multiple segments, these segments comprise horizontal (31) and/or vertical parting planes (29; 30), and wherein the half rings (6; 7) or segments, joined in a pressure-tight manner, form a radially arranged annular clamping surface (4) that can be assigned to a fixed counter-surface (25) on the shaft (1) or on the ring (28).

2. The device according to claim 1, **characterized in that**
the half rings (6; 7) of the hollow ring (3) are configured symmetrically.

3. The device according to claim 1, **characterized in that**
the half rings (6; 7) of the hollow ring (3) are configured asymmetrically.

4. The device according to claim 1, **characterized in that**
the clamping surface (4) of the hollow ring (3) clamps the shaft (1) or the rotatable ring (28), wherein said hollow ring (3) is fastened to the fixed housing (2).

5. The device according to claim 1, **characterized in that**
the clamping surface (4) of the hollow ring (3) clamps the housing (2), wherein said hollow ring (3) is fastened to the rotating shaft (1).

6. The device according to claim 1, **characterized in that**
the hollow ring (3) is filled with a pressure medium (5) which resiliently deforms the half rings (6; 7) joined in a pressure-tight manner by means of the device (18; 19; 20; 21) for generating the working pressure via the tube (15) and the pressure channel (13) into the RELEASE operating direction (9) when a defined operating pressure is set, and sets the CLAMP operating direction (8) by resiliently restoring the shape of the half rings (6; 7) when this operating pressure drops.

7. The device according to claim 1, **characterized in that**
multiple hollow rings (3) are arranged in parallel to one another.

8. The device according to claim 1, **characterized in that**
a distance sensor (10) and/or other collecting means are disposed outside the half rings (6; 7) and transmit a distance value to a controller (22).

9. The device according to claim 1, **characterized in that**
a device for position monitoring of the clamping surface (4) of the hollow ring (3) using a distance sensor (10) and/or other collecting means outside the half rings (6; 7) transmit(s) position data of the clamping surface (4) and/or the half rings (6, 7) to a controller (22).

10. The device according to claim 1, **characterized in that**
the half rings (6; 7) are joined by forming, welding, gluing, or clamping into a hollow ring (3) with or without an extra seal (11).

11. The device according to claim 1, **characterized in that**
the clamping surface (4) of the hollow ring (3) and/or the counter surface (25) on the shaft (1), on the ring (28), or on the housing (2) has/have a friction-enhancing coating.

12. The device according to claim 1, **characterized in that**
the clamping surface (4) comprises a sensor that monitors its wear condition.

13. The device according to claim 1, **characterized in that**
the device for generating the defined working pressure in the compression chamber (17) of the hollow ring (3) consists of a pump (18), a directional control valve (19), a pressure accumulator (20), a pressure sensor (21), and a controller (22).

14. The device according to claim 1, **characterized in that**
a controller (22) captures the power consumption of a drive motor (23) for the shaft (1), compares it to a setpoint value, and switches the power supply to the drive motor (23) off when a threshold value is reached.

## Revendications

1. Dispositif de blocage d'arbres (1) ou de bagues (28) qui peut pivoter ou tourner autour de leur axe longitudinal (26) et qui peut être positionné sur n'importe quelle position de rotation (27), où l'arbre (1) ou la bague (28) sont mécaniquement liés à une bague creuse (3) qui, elle, présente une chambre de compression (17) pouvant être élastiquement déformée par un agent de pressurisation (5). De son côté, cette chambre de compression présente au moins un canal de refoulement (13) et est raccordée, par ledit canal de refoulement (13), à un dispositif (15; 18; 19; 20; 21; 24; 22) de production et de réglage de l'agent de pressurisation (5), **caractérisé en ce**
**que** la chambre de compression (17) de la bague creuse (3) est formée de deux demi-anneaux assemblés et étanches à la pression (6; 7) ou de plusieurs segments assemblés et étanches à la pression, que sur la bague creuse (3) formée par plusieurs segments, ces derniers présentent des plans de séparation (31) horizontaux et/ou verticaux (29; 30), et que les demi-anneaux assemblés et étanches à la pression (6; 7) ou les segments assemblés et étanches à la pression forment une zone de blocage (4) annulaire et radialement disposée qui, elle, peut être associée à une zone opposée et fixe (25) située sur l'arbre (1) ou sur la bague (28).

2. Dispositif suivant la revendication 1, **caractérisé en ce**
**que** les demi-anneaux (6; 7) de la bague creuse (3) sont disposés de façon symétrique.

3. Dispositif suivant la revendication 1, **caractérisé en ce**
**que** les demi-anneaux (6; 7) de la bague creuse (3) sont disposés de façon non symétrique.

4. Dispositif suivant la revendication 1, **caractérisé en ce**
**que** l'arbre (1) ou la bague rotative (28) sont bloqués par la zone de blocage (4) de la bague creuse (3), la bague creuse (3) étant fixée sur la boîte stationnaire (2).

5. Dispositif suivant la revendication 1, **caractérisé en ce**
**que** la boîte (2) est bloquée par la zone de blocage (4) de la bague creuse (3), la bague creuse (3) étant fixée sur l'arbre rotatif (1).

6. Dispositif suivant la revendication 1, **caractérisé en ce**
**que** la bague creuse (3) est remplie d'un agent de pressurisation (5) qui, au moyen du dispositif (18; 19; 20; 21) prévu pour produire la pression de commande dans le tuyau flexible (15) et dans le canal de refoulement (13), déforme élastiquement les demi-anneaux assemblés et étanches à la pression (6; 7) lors d'une pression de service définie, ceci faisant activer le mode "DÉBLOQUER" (9). Lorsque cette pression de service est réduite, une reprise élastique des demi-anneaux (6; 7) provoque le passage au mode "BLOQUER" (8).

7. Dispositif suivant la revendication 1, **caractérisé en ce**
**que** plusieurs bagues creuses (3) sont parallèlement disposées.

8. Dispositif suivant la revendication 1, **caractérisé en ce**
**qu'**un capteur de distance (10) et/ou d'autres capteurs sont disposés à l'extérieur des demi-anneaux (6; 7) afin d'émettre une valeur de distance vers une commande (22).

9. Dispositif suivant la revendication 1, **caractérisé en ce**
**qu'**un capteur de positionnement de la zone de blocage (4) de la bague creuse (3) émet, par un capteur de distance (10) et/ou par d'autres capteurs situés à l'extérieur des demi-anneaux (6; 7), des donnés sur le positionnement de la zone de blocage (4) et/ou des demi-annaux (6, 7) vers une commande (22).

10. Dispositif suivant la revendication 1, **caractérisé en ce**
**que** les demi-anneaux (6; 7) sont transformés par formage, soudage, collage ou blocage en une bague creuse (3), celle-ci pouvant être munie d'un joint supplémentaire (11) ou non.

11. Dispositif suivant la revendication 1, **caractérisé en ce**
**que** sur l'arbre (1), sur la bague (28) ou sur la boîte (2), la zone de blocage (4) de la bague creuse (3) et/ou la zone opposée (25) présent/présentent un revêtement qui fait augmenter le coefficient de frottement.

12. Dispositif suivant la revendication 1, **caractérisé en ce**
**que** la zone de blocage (4) est dotée d'un capteur servant à surveiller l'état d'usure.

13. Dispositif suivant la revendication 1, **caractérisé en ce**
**que** le dispositif prévu pour produire la pression définie dans la chambre de compression (17) de la bague creuse (3) est composé d'une pompe (18), d'une vanne réglable (19), d'un accumulateur de pression (20), d'un capteur de pression (21) et d'une commande (22).

14. Dispositif suivant la revendication 1, **caractérisé en ce qu'**une commande (22) saisit l'intensité absorbée du moteur d'entraînement (23) pour l'arbre (1) pour la comparer ensuite à une valeur de consigne. En cas de détection d'une valeur de seuil, ce dispositif coupe l'approvisionnement en énergie vers le moteur d'entraînement (23).
